# EUROPEAN PATENT APPLICATION

(11) **EP 3 618 450 A1**
(43) Date of publication of application: **04.03.2020**
(21) Application number: 19194366.1
(22) Date of filing: 29.08.2019
(51) Int. Cl.: H04N 21/854, H04N 21/8547, H04N 21/81

(54) **SYSTEMS, DEVICES, AND METHODS FOR STREAMING HAPTIC EFFECTS**

(30) Priority: 30.08.2018 US 201816117469
(71) Applicant: Immersion Corporation, San Jose, CA 95134 (US)
(72) Inventor: WU, Liwen, Verdun, Québec H4H 1V6 (CA); OLIVER, Hugues-Antoine, Montreal, Québec H1M 3V9 (CA); SINAI_GLAZER, Sagi, Westmount, Québec H3Z 1E8 (CA)
(74) Representative: Hofstetter, Schurack & Partner

(57) **Abstract**

Systems, devices, and methods for streaming haptic effects are provided. Devices and methods are provided to create a system for receiving and encoding haptic effects according to a master haptics library. The encoded haptic effects are transmitted to a server system for distribution to client haptic devices. The client haptic devices include device specific haptic libraries for decoding the received haptic effects according to the capabilities of the respective devices.

## Description

### FIELD OF THE INVENTION

Embodiments hereof relate to systems, devices and methods for streaming haptic effects. In particular, embodiments hereof provide techniques for authoring, encoding, streaming, decoding, and playback of haptic effects from a haptic effects author to one or many recipient client haptic devices.

### BACKGROUND OF THE INVENTION

Haptic effects, alone or in combination with traditional media formats, including audiovisual formats, provide an enhanced user experience. Haptic effect streams can be combined with audiovisual streams to enhance the user experience with streaming media, whether it be live streaming media or pre-recorded streaming media. Client haptic devices include one or more haptic actuators to deliver the haptic effects of a haptic effect stream to a user. Different models of client haptic devices, however, may include different sets of actuators and therefore different output capabilities. Output capabilities may differ in terms of the haptic effects that are available, the magnitude of output, the bandwidth of output, and other characteristics of haptic effects.

Difference in output capabilities of various models of client haptic devices can lead to difficulties in designing haptic effects. For example, an operator or user preparing haptic effects, e.g., a haptic designer, may have to decide whether to design haptic effects including only the subset of effects that a majority of devices can reproduce or to take advantage of new and differing haptic capabilities. Even common actuators for common haptic effects may differ in individual specifications and characteristics. Designing different haptics streams for multiple different devices is impractical and burdensome.

These and other drawbacks exist with conventional haptically enabled display devices. These drawbacks are address by the inventions described herein.

### BRIEF SUMMARY OF THE INVENTION

Embodiments of the invention include an end-to-end system for one-to-many haptics stream authoring, streaming, and playback. A haptic authoring system receives a stream of haptic effects, either pre-recorded or authored by an operator as they are sent to the system. The stream of haptic effects may also include a "haptic track," i.e., a series of haptic effects. The authoring system breaks down each of the haptic effects in the stream into haptic blocks of content identifiers by encoding the haptic effects according to a library of associations between basic haptic elements intended by the operator and content identifiers. Instead of transmitting the raw data of the haptics stream, the authoring system transmits the haptic blocks to a haptic server system. The haptic server system connects with haptic client devices, supplies them with device-specific libraries for decoding the haptic blocks, and transmits the haptic blocks to the haptic client devices. The haptic client devices then decode the haptic blocks by associating the received content identifiers with basic haptic elements playable by the haptic client device. Accordingly, the haptic designer creates a single haptics stream which may then be encoded and transmitted to multiple haptic client devices of differing capabilities for playback.

In an embodiment, a computer implemented method of encoding haptic inputs for transmission is provided. The method is performed on a computer system having one or more physical processors programmed with computer program instructions that, when executed by the one or more physical processors, cause the computer system to perform the method. The method comprises accessing a master haptics library storing associations between content identifiers and designed haptic effects, the designed haptic effects including a first haptic block template and a second haptic block template. The method further comprises receiving haptic effect information; generating a first haptic block according to the first haptic block template based on the haptic effect information; and attaching a first timestamp to the first haptic block according to the haptic effect information. The method further comprises generating, from the master haptics library, a second haptic block according to the second haptic block template based on the haptic effect information; attaching a second timestamp to the second haptic block according to the haptic effect information; and encapsulating the first haptic block and the first timestamp with the second haptic block and the second timestamp into a haptic data unit. The method further comprises transmitting the haptic data unit to a haptic server for distribution to one or more client haptic devices.

In an embodiment, a system for encoding and transmitting a stream of haptic effects is provided. The system comprises one or more processors and a memory storing instructions. When executed by the one or more processors, the instructions cause the system to access a master haptics library storing a plurality of haptic block templates, each haptic block template representing a haptic element and having block characteristics, and to receive haptic effect information. The instructions further cause the system to generate, from the master haptics library, a first haptic block having a first block template and first block parameters according to the haptic effect information, attach a first timestamp to the first haptic block according to the haptic effect information, and to generate, from the master haptics library, a second haptic block having a second block template and second block parameters according to the haptic effect information. The instructions further cause the system to attach a second timestamp to the second haptic block according to the haptic effect information, encapsulate the first haptic block and the first timestamp with the second haptic block and the second timestamp into a haptic data unit, and transmit the haptic data unit to a haptic server for distribution to one or more client haptic devices.

In an embodiment, a computer implemented method of transmitting a stream of haptic effects is provided. The method is performed on a haptic server having one or more physical processors programmed with computer program instructions that, when executed by the one or more physical processors, cause the computer system to perform the method. The method comprises establishing communication with a haptic authoring system; receiving from the haptic authoring system a master haptics sub-library comprising a subset of a master haptics library stored on the haptic authoring system; and establishing communication with a client haptic device. The method further comprises accessing a device haptics library; providing to the client haptic device a device specific haptics sub-library from the device haptics library according to a device identification of the client haptic device and the master haptics sub-library; and receiving a master haptics stream from the haptic authoring system; generating a client haptics stream from the master haptics stream. The method further comprises transmitting the client haptics stream to the client haptic device.

In an embodiment, a haptic server system for transmitting a stream of haptic effects is provided. The haptic server system comprises one or more processors; and a memory storing instructions. When executed by the one or more processors, the instructions cause the system to establish communication with a haptic authoring system, receive from the haptic authoring system a master haptics sub-library comprising a subset of a master haptics library stored on the haptic authoring system. The instructions further cause the system to establish communication with a client haptic device and access a device haptics library. The instructions further cause the system to provide to the client haptic device a device specific haptics sub-library from the device haptics library determined according to a device identification of the client haptic device and the master haptics sub-library, receive a master haptics stream from the haptic authoring system, generate a client haptics stream, and transmit the client haptics stream to the client haptic device.

In an embodiment, a computer implemented method of decoding a client haptics stream for playback is provided. The method is performed on a client haptic device having one or more physical processors programmed with computer program instructions that, when executed by the one or more physical processors, cause the client haptic device to perform the method. The method comprises establishing communication with a haptic server; obtaining a client haptics library from the haptic server, wherein the client haptics library is generated by the haptic server according to a device identification of the client haptic device. The method further comprises receiving, by the client haptic device, a client haptics stream from the haptic server, the client haptics stream comprising a plurality of haptic blocks and a corresponding plurality of timestamps. The method further comprises generating a plurality of haptic effects for playback on one or more actuators of the client haptic device, each haptic effect selected from the client haptics library according to a content identifier of a corresponding haptic block from the client haptics stream to be played back at a time in accordance with a timestamp of the corresponding haptic block; and outputting the plurality of haptic effects to the one or more actuators of the client haptic device.

In an embodiment a client haptic device for decoding a client haptics stream for playback is provided. The client haptic device comprises one or more processors; and a memory storing instructions. When executed by the one or more processors, the instructions cause the client haptic device to establish communication with a haptic server, obtain a client haptics library from the haptic server, wherein the client haptics library is generated by the haptic server according to a device identification of the client haptic device, receive the client haptics stream from the haptic server, the client haptics stream comprising a plurality haptic blocks and a corresponding plurality of timestamps. The instructions further cause the client to generate a plurality of haptic effects for playback on an actuator of the client haptic device, each haptic effect selected from the client haptics library according to a corresponding haptic block from the client haptics stream to be played back at a time in accordance with a timestamp of the corresponding haptic block and output the plurality of haptic effects to the actuator of the client haptic device.

### BRIEF DESCRIPTION OF DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIG. 1 illustrates a haptics stream transmission system according to an embodiment.
FIG. 2 is a diagram illustrating operation of a system for transmitting encoded streams of haptic effects according to an embodiment.
FIG. 3 is a diagram illustrating operation of a haptic authoring system according to an embodiment.
FIG. 4 is a schematic illustration of haptic libraries according to an embodiment.
FIG. 5 illustrates structure of haptic data units according to an embodiment.
FIG. 6 illustrates operation of a haptic server system according to an embodiment.
FIGS. 7A and 7B illustrate an end-to-end haptics stream transmission from a haptic authoring system to client haptic devices according to an embodiment.
FIG. 8 illustrates operation of a client haptic device according to an embodiment.
FIG. 9 illustrates a method of encoding and transmitting a stream of haptic effects according to an embodiment.
FIG. 10 illustrates a method of transmitting a stream of haptic effects to a client haptic device according to an embodiment.
FIG. 11 illustrates a method of receiving and decoding a stream of haptic effects for playback according to an embodiment.

### DETAILED DESCRIPTION OF THE INVENTION

Specific embodiments of the present invention are now described with reference to the figures. The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Embodiments of the present invention are directed to the creation, transmission, and playback of data streams of encoded haptic effects, referred to herein as haptics streams. A haptic authoring system is provided to receive haptic effects, encode the haptic effects according to a master haptics library, and transmit the haptic effects as a master haptics stream. A haptic server system is provided to receive the master haptics stream from the haptic authoring system and parse the master haptics stream into client haptics streams for client haptic devices. The haptic server system also provides and updates client haptics libraries permitting each specific client haptic device to decode the client haptics streams for playback on the specific device. The haptic server system may also be configured to provide additional media content to client haptic devices for playback, including audiovisual streams, for example.

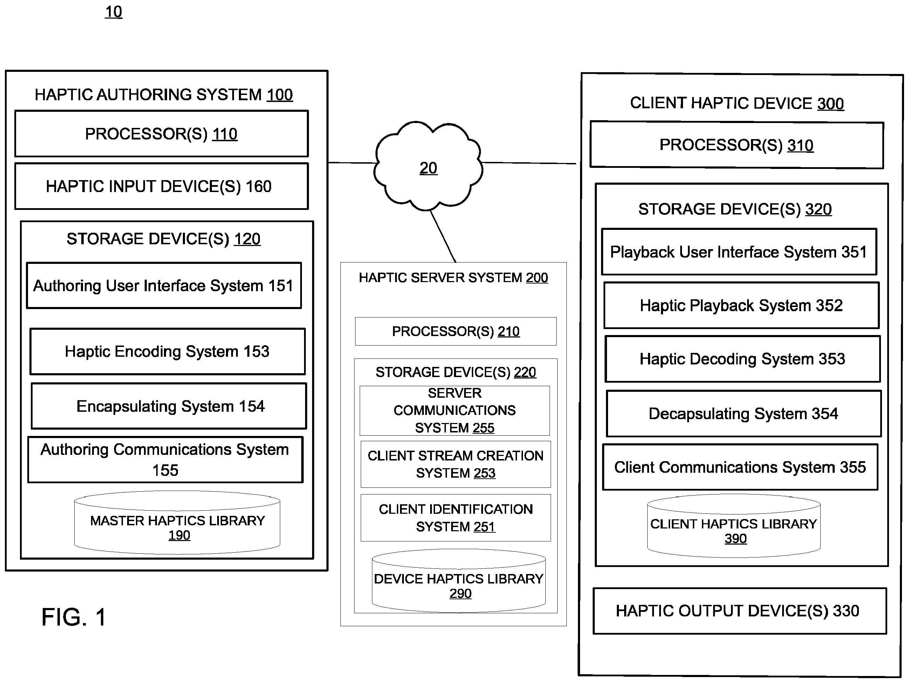

FIG. 1 illustrates a hapticsstream transmission system 10 for authoring, encoding, transmitting, and playback of haptics streams. The haptics stream transmission system 10 includes a haptic authoring system 100, a haptic server system 200, and a client haptic device 300, in communication via network 20. The haptics stream transmission system 10 may further include any number of additional haptic authoring systems 100, haptic server systems 200, and client haptic devices 300, and is not limited to including one of each. Embodiments described herein having specific numbers of haptic authoring systems 100, haptic server systems 200, and client haptic devices 300 are provided for illustrative purposes only and are not intended to be limiting.

The haptic authoring system 100 may be configured as a server (e.g., having one or more server blades, processors, etc.), a personal computer (e.g., a desktop computer, a laptop computer, etc.), a smartphone, a tablet computing device, and/or other device that can be programmed to receive and encode haptic effects. In an embodiment, any or all of the functionality of the computing haptic authoring system 100 may be performed as part of a cloud computing platform.

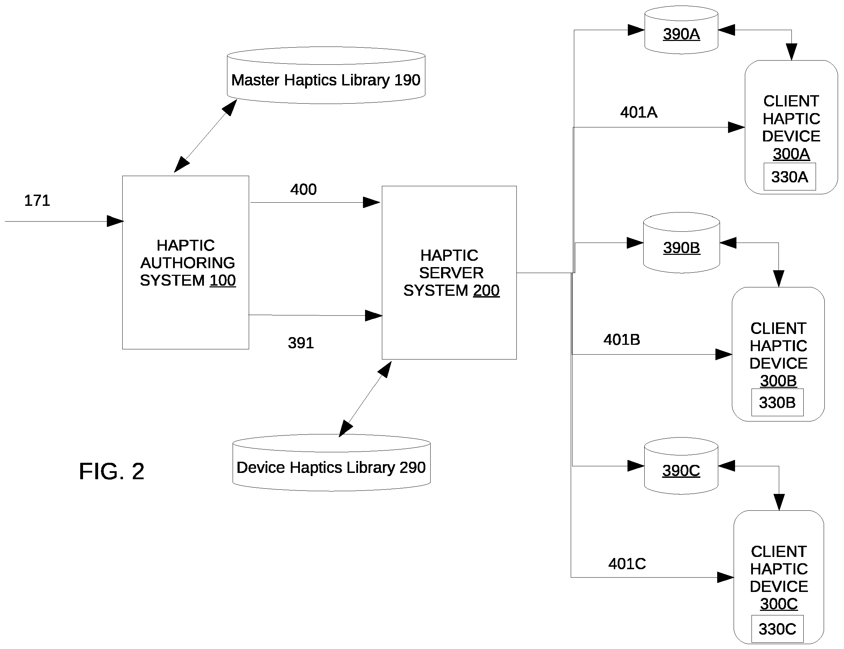

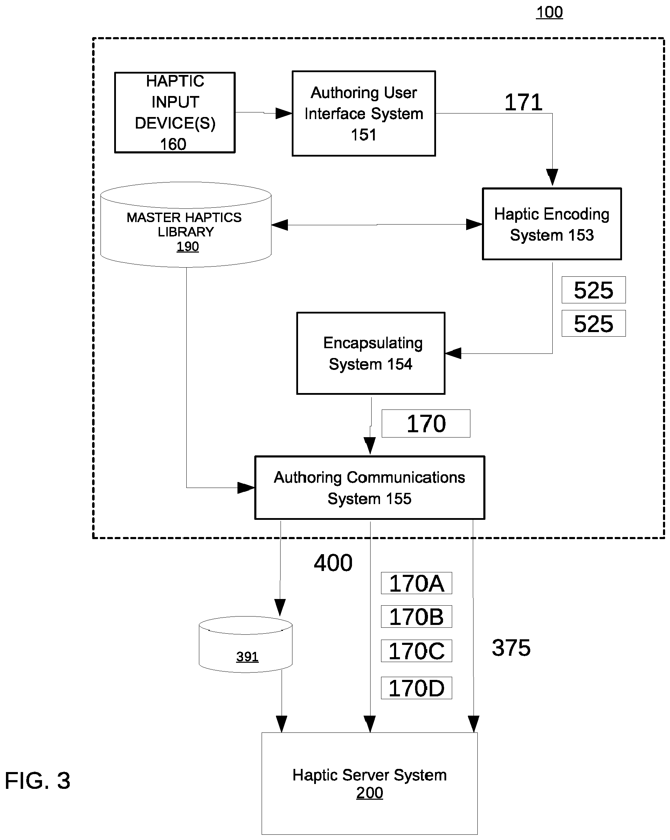

The haptic authoring system 100 includes one or more processors 110 (also interchangeably referred to herein as processors 110, processor(s) 110, or processor 110 for convenience), one or more storage device(s) 120, one or more haptic input device(s) 160, and/or other components. The processor 110 is programmed by one or more computer program instructions stored on the storage device 120. For example, the processor 110 is programmed by an authoring user interface system 151, a haptic encoding system 153, an encapsulating system 154, and an authoring communications system 155. Additionally, the storage device 120 stores a master haptics library 190. As used herein, for convenience, the various instruction modules and systems will be described as performing an operation, when, in fact, the modules and systems program the processor 110 (and therefore the haptic authoring system 100) to perform the operation. Further details and features of the haptic authoring system 100 configured for implementing features of the described invention may be understood with respect to FIGS. 2 and 3.

Storage devices, as discussed herein,_include non-transitory computer readable media, and to any media or computer memory that stores data and/or instructions that cause a machine to operate in a specific fashion. Such non-transitory media may comprise non-volatile media and/or volatile media. Non-volatile media includes, for example, optical or magnetic disks, as well as various forms of solid state media. Volatile media includes dynamic memory. Common forms of non-transitory media include, for example, a floppy disk, a flexible disk, hard disk, solid state drive, magnetic tape, or any other magnetic data storage medium, a CD-ROM, DVD, Blu-Ray, any other optical data storage medium, any physical medium with patterns of holes, a RAM, a PROM, and EPROM, a FLASH-EPROM, NVRAM, any other memory chip or cartridge, and networked versions of the same.

The haptic server system 200 may be configured as a server (e.g., having one or more server blades, processors, etc.), a personal computer (e.g., a desktop computer, a laptop computer, etc.), a smartphone, a tablet computing device, and/or other device that can be programmed to receive and transmit haptics streams. In an embodiment, any or all of the functionality of the haptic server system 200 may be performed as part of a cloud computing platform.

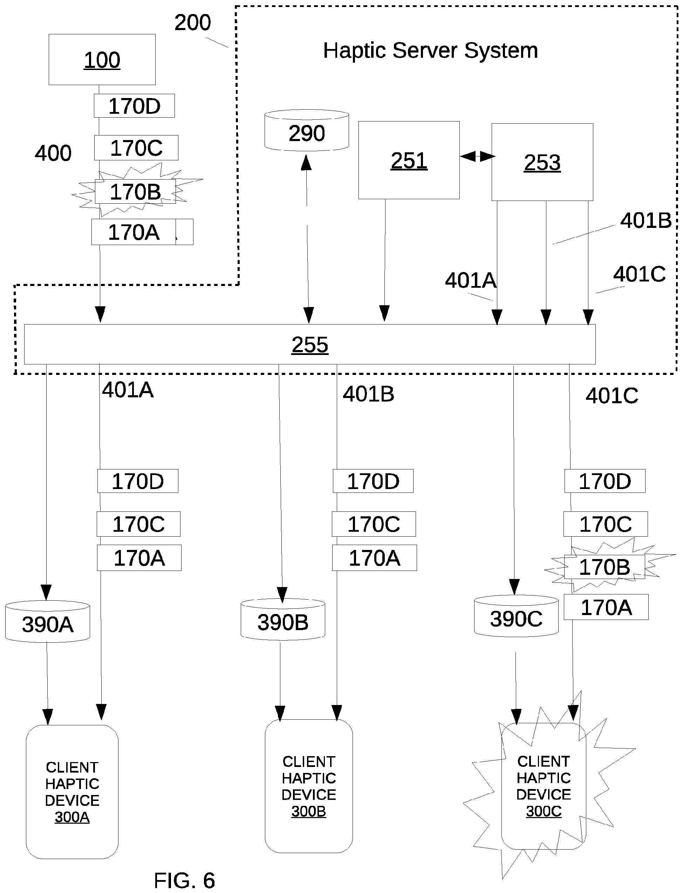

The haptic server system 200 includes one or more processors 210 (also interchangeably referred to herein as processors 210, processor(s) 210, or processor 210 for convenience), one or more storage device(s) 220, and/or other components. The processor 210 is programmed by one or more computer program instructions stored on the storage device 220. For example, the processor 210 is programmed by a server communications system 255, a client stream creation system 253, and a client identification system 251. Additionally, the storage device 220 stores a device haptics library 290. As used herein, for convenience, the various instruction modules and systems will be described as performing an operation, when, in fact, the modules and systems program the processor 210 (and therefore the haptic server system 200) to perform the operation. Further details and features of the haptic server system 200 configured for implementing features of the described invention are described with respect to FIGS. 2 and 6.

The client haptic device 300 may be configured as a personal computer (e.g., a desktop computer, a laptop computer, etc.), a smartphone, a tablet computing device, a smartwatch, video game controller or console, virtual reality (VR), augmented reality (AR), or mixed reality (MR) headset, and/or other device that can be programmed to receive haptics streams and output haptic effects. In an embodiment, any of the computing functionality of the haptic client device 300 may be performed as part of a cloud computing platform.

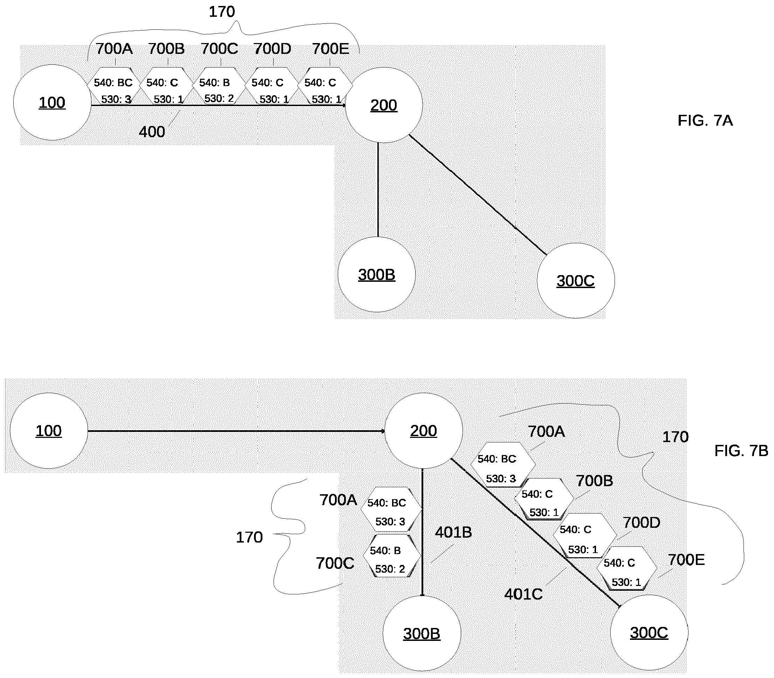

The client haptic device 300 includes one or more processors 310 (also interchangeably referred to herein as processors 310, processor(s) 310, or processor 310 for convenience), one or more storage device(s) 320, and/or other components. The processor 310 is programmed by one or more computer program instructions stored on the storage device 320. For example, the processor 310 is programmed by a playback user interface system 351, a haptic playback system 352, a haptic decoding system 353, a decapsulating system 354, and a client communications system 355. Additionally, the storage device 320 stores a client haptics library 390. As used herein, for convenience, the various instruction modules and systems will be described as performing an operation, when, in fact, the modules and systems program the processor 310 (and therefore the client haptic device 300) to perform the operation. The client haptic device 300 also includes one or more haptic output devices 330. Further details and features of the client haptic device 300 configured for implementing features of the described invention may be understood with respect to FIGS. 2 and 7.

The haptic output devices 330 may be or include any suitable output device known in the art. For example, the haptic output devices 330 may include thin film actuators, such as macro-fiber composite (MFC) actuators, piezoelectric material actuators, smart material actuators, electro-polymer actuators, and others. The haptic output devices 330 may further include inertial or kinesthetic haptic actuators, eccentric rotating mass ("ERM") haptic actuators in which an eccentric mass is moved by a motor, linear resonant haptic actuators ("LRAs") in which a mass attached to a spring is driven back and forth, vibrotactile haptic actuators, shape memory alloys, and/or any combination of haptic output devices described above.

FIG. 1 illustrates software systems and haptics libraries located on storage devices within the haptic authoring system 100, the haptic server system 200, and the client haptic device 300. In further embodiments, any or all of the software systems and haptics libraries may be stored and/or executed remotely from the associated system. For example, each of the master haptics library 190, the device haptics library 290, and the client haptics library 390 may be stored at a remote location and accessed by the associated system or device as necessary. The various software systems may also be stored and/or executed remotely, for example, in a cloud computing environment.

FIG. 2 is a diagram illustrating operation of the system 10 for authoring, encoding, and transmitting a haptics stream. The haptic authoring system 100 receives haptic effect information 171 from a user, drawn from a pre-stored haptic effects file, and/or a combination of both. The haptic authoring system 100 encodes a plurality of haptic effects and generates a master haptics stream 400 by accessing the master haptics library 190 to encode the haptic effects into the master haptics stream 400, as explained in greater detail below with respect to FIG. 3.

FIG. 3 is a diagram illustrating the operation of haptic authoring system 100. The haptic authoring system 100 is configured to receive the haptic effect information 171 via one or more haptic input devices 160 through the authoring user interface system 151 and output a plurality of haptic data units 170. The haptic data units 170 encode the haptic effect information 171 and are generated by the various software systems of the haptic authoring system 100 in conjunction with the master haptics library 190.

The haptic data units 170 are basic units of computer data that may be transmitted to other computing devices via any suitable transmission protocol. The haptic data units 170 may include, for example, segments, packets, and/or frames.

The authoring user interface system 151 is a software module operating on the haptic authoring system 100. The authoring user interface system 151 provides an interface to a user to permit the authoring of haptic effects. The authoring user interface system 151 permits the authoring of a series of haptic effects as a haptic track. The authoring user interface system 151 allows a user to input, design, and/or modify haptic effects through interaction with the authoring user interface system 151. A user interacts with the authoring user interface system 151 through one or more haptic input devices 160 as well as any type of traditional computer input.

The authoring user interface system 151 receives haptic inputs via one or more haptic input devices 160 and generates haptic effect information 171 based on the haptic inputs. The haptic input devices 160 may include basic computer input devices such as keyboards, mice, and touchscreens. The haptic input devices 160 may also include specialized devices configured for reception of input gestures, such as haptically enabled gloves and/or other wearables, cameras, radars, or other sensors configured to capture gestures, and any other device capable of receiving haptic inputs. For example, a user may cause the authoring user interface system 151 to generate haptic effect information 171 by providing input gestures as input via a haptically enabled gloves. In another example, a user may operate a keyboard, mouse, and/or touchscreen to define the parameters of a haptic effect and/or to access a pre-stored library of effects. In embodiments, the authoring user interface system 151 may permit a user to access one or more databases or libraries of haptic effects, from which the user may draw haptic effects when creating a haptic track.

The authoring user interface system 151 further permits a user to modify the haptic effect information 171 of input haptic effects. Haptic effect information 171 includes a length, duration, frequency, type, and/or any other parameter of a haptic effect and is modifiable by a user via the authoring user interface system 151. The user also may use the authoring user interface system 151 to combine haptic effect information 171 of multiple input haptic effects to form combined haptic effects and/or to develop a track of haptic effects. The authoring user interface system 151 may also be used to access or receive previously authored haptic effect information 171 or haptic effects, either for use in generating new haptic effects or for encoding directly into haptics streams. Previously authored haptic effect information 171 may be stored, for example, in a storage location that may include the storage device 120 and/or any other computer memory accessible by the haptic authoring system 100, including additional peripheral storage devices, portable computer memory devices, and networked computer memory devices.

The haptic encoding system 153 is a software module operating on the haptic authoring system 100. The haptic encoding system 153 encodes the haptic effect information 171 received, modified, and/or generated via the authoring user interface system 151. The haptic encoding system 153 accesses the master haptics library 190 to perform the encoding.

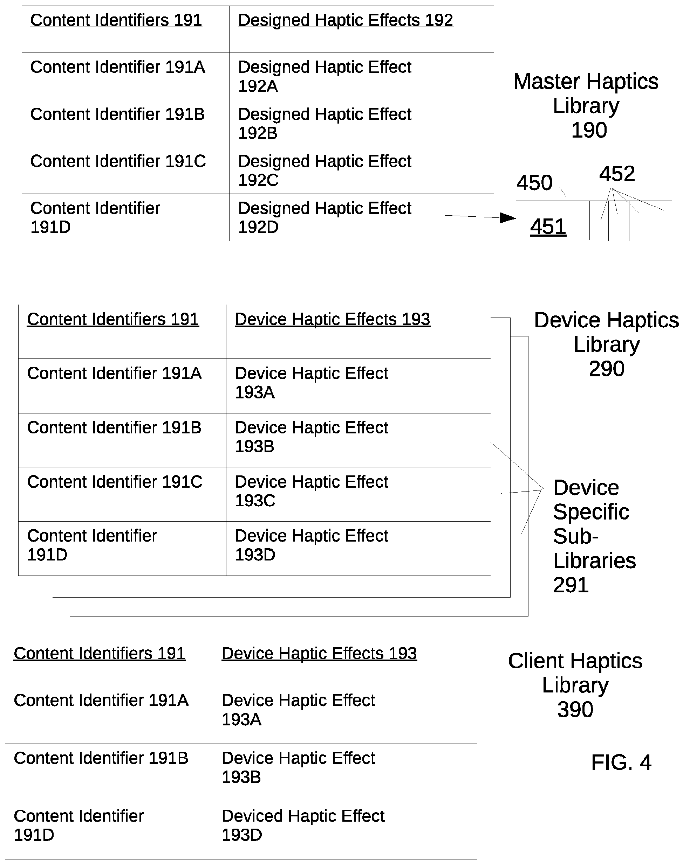

FIG. 4 illustrates the structure of the master haptics library 190, device haptics library 290, and client haptics library 390. The master haptics library 190 stores associations between a group of content identifiers 191 and a group of designed haptic effects 192. Each individual content identifier 191A, 191B, 191C, 191D identifies and is associated with an individual designed haptic effect 192A, 192B, 192C, 192D. The content identifiers 191 act as indexes to their associated designed haptic effects 192. The designed haptic effects 192 represent haptic effects according to the initial design intent of the operator that authored the haptic effects. When designing a haptic track or other series of haptic effects, the haptic designer selects what he or she believes to be the optimal haptic effects, represented by the designed haptic effects. The content identifiers 191A, 191B, 191C, 191D associated with each designed haptic effect 192A, 192B, 192C, 192D in the master haptics library 190 therefore identify the intended haptic effects of the haptic designer.

The device haptics library 290, stored on the haptic server system 200, is a collection of device specific sub-libraries 291. FIG. 4 illustrates device specific three sub-libraries, one of which is illustrated in detail. The device haptics library 290 is not limited to three device specific sub-libraries and may contain as many device specific sub-libraries 291 as required. Each device specific sub-library 291 of the device haptics library 290 corresponds to a specific model or type of client haptic device 300. In the device specific sub-libraries 291, the content identifiers 191 are associated with device haptic effects 193. Each individual content identifier 191A, 191B, 191C, 191D is associated with an individual device haptic effect 193A, 193B, 193C, 193D. Each device specific sub-library 291 is associated with a specific model or type of client haptic device 300 and permits a mapping between the initial design intent of the haptic designer, represented by the designed haptic effects 192 and the capabilities of the client haptic device 300, represented by the device haptic effects 193. As used herein, the capabilities of the client haptic device 300 may refer both to the collective capability of all haptic output devices 330 associated with the client haptic device 300 and to the individual capabilities of each of the haptic output devices 330 associated with the client haptic device 300. The designed haptic effect 192 with which a content identifier 191 is associated in the master haptics library 290 may be the same as or may differ from the device haptic effect 193 with which that same content identifier 191 is associated in the device specific sub-library 291. For example, where a specific model of client haptic device includes all types of actuators required to implement a designed haptic effect 192, then both the designed haptic effect 192 and the device haptic effect 193 associated with a specific content identifier 191 will be the same. Where the specific model of client haptic device, however, lacks the appropriate haptic actuators to carry out a designed haptic effect 192 as originally intended, then the device haptic effect 193 associated with a specific content identifier 191 will differ from the designed haptic effect 192 associated with that specific content identifier 191 because the device haptic effect 193 includes information for providing an alternative to the designed haptic effect 192. Thus, when a device has the capability of carrying out a designed haptic effect 192 as intended by the designer, it will. When a client haptic device 300 does not have the capability of carrying out a designed haptic effect 192 as intended by the designer, it will perform an alternative device haptic effect 193. The alternative device haptic effect 193 may be specifically selected to be as similar as possible to the designed haptic effect 192 and/or to convey the same information or intention as the designed haptic effect 192. For example, a specific content identifier 191a may correspond to a designed haptic effect 192a including a vibration at a specific frequency from a linear resonant actuator. In the device specific sub-library 291 of a client haptic device 300 that does not have a linear resonant actuator, a device haptic effect 193a including a vibration at the same frequency from an eccentric rotating mass may correspond to the specific content identifier 191a.

The client haptics library 390 is stored on the client haptic device 300 and is a full or partial copy of the device specific sub-library 291 that corresponds to the model or type of the client haptic device 300. The client haptics library 390 may be maintained in various ways in different embodiments. As illustrated in FIG. 4, the client haptics library 390 may be a partial copy of a device specific sub-library 291. FIG. 4 shows a client haptics library 390 that includes the content identifiers 191A, 191B, and 191D along with the corresponding device haptic effects 193A, 193B, and 193D, but not the content identifier 191C and its associated device haptic effect 193C. In such an embodiment, the client haptics library 390 may be downloaded by the client haptic device 300 from the haptic server system 200 prior to receiving a haptics stream and the client haptics library 390 may include only content identifiers 191 that are included in the haptics stream. In this example, the haptics stream does not include the content identifier 191C and it is therefore not present in the client haptics library 390. Thus, the client haptic device 300 receives only the information required to decode the next haptics stream. The client haptics library 390 may also be stored persistently on the client haptic device 300 as either a partial or complete copy of the associated device specific sub-library 291. When stored persistently, the client haptics library 390 may be updated by the haptic server system 200 prior to receiving a haptics stream by the client haptic device 300. In another embodiment, a complete copy of the device specific sub-library 291 may be downloaded by the client haptic device 300 to be stored as the client haptics library 390 prior to receiving a haptics stream each time a haptics stream is to be downloaded.

In an embodiment, an individual client haptic device 300 may have a specific customized client haptics library 390 associated with the individual client haptic device. A user may customize the client haptics library 390 according to their own preferences. For example, a user may prefer the sensation when a particular haptic effect is output via the device speaker, rather than a device actuator. That user may create a customized client haptics library 390 that maps the content identifier of the particular haptic effect to their preferred haptic output for their specific device. In such an embodiment, automatic updates from the haptic server system 200 may be disabled.

With continued reference to FIG. 4, the designed haptic effects 192 and the device haptic effects 193 of the various libraries are stored as haptic block templates 450 associated with the content identifiers 191. FIG. 4 illustrates a single example haptic block template 450 storing the information of the designed haptic effect 192D. Each of the other designed haptic effects 192 and device haptic effects 193 also include a corresponding haptic block template 450 (not illustrated). Each haptic block template 450 is a template or data structure defining a basic haptic element ID 451 and block parameters 452. In the device specific sub-libraries 291, the content identifiers 191 are associated with device haptic effects 193 similarly stored as haptic block templates 450. As discussed above, the haptic block templates 450 associated with a specific content identifier 191 may differ between the master haptics library 190 and the device specific sub-libraries 291. Basic haptic element IDs 451 defined by the haptic block templates 450 are identifiers representing basic haptic elements, i.e., foundational building blocks of larger haptic effects. The basic haptic element IDs 451 are shorthand representations of basic haptic elements defined based on actuator types and include basic effects playable on a specific actuator. For example, for an ERM actuator, basic haptic elements include vibrational effects at the various frequencies within the bandwidth of the actuator. The basic haptic elements available on the ERM actuator may be identified by basic haptic element IDs 451. The duration of the basic haptic element, in this example, is the shortest usable effect. For an ERM, the shortest usable effect may have a duration equivalent to the rise time of the ERM. The block parameters 452 of each haptic block template 450 define operational parameters of the basic haptic element as implemented. Block parameters 452 include, for example, magnitude and number of repetitions. Thus, a basic haptic effect may be called out by a content identifier 191 and one or more accompanying parameters. The content identifier 191 identifies a specific haptic block template 450 for a haptic effect, and thus a basic haptic element ID 451. The accompanying block parameters 452 represent modifiers to the basic haptic element, for example, playback magnitude and number of repetitions.

In this way, the haptic block template 450 can store information that represents or indicates a basic haptic effect without a requirement to store a control signal or other signal that fully defines the basic haptic effect. For example, consider a basic haptic effect comprising three oscillations of an ERM actuator at a specific frequency and magnitude. This basic haptic effect is fully defined by a sine wave having three full repetitions which may require a relatively significant amount of data to store fully. The basic haptic element ID 451 consists of a shorthand identifier indicative of a three oscillation effect while the block parameters 452 store the frequency and magnitude.

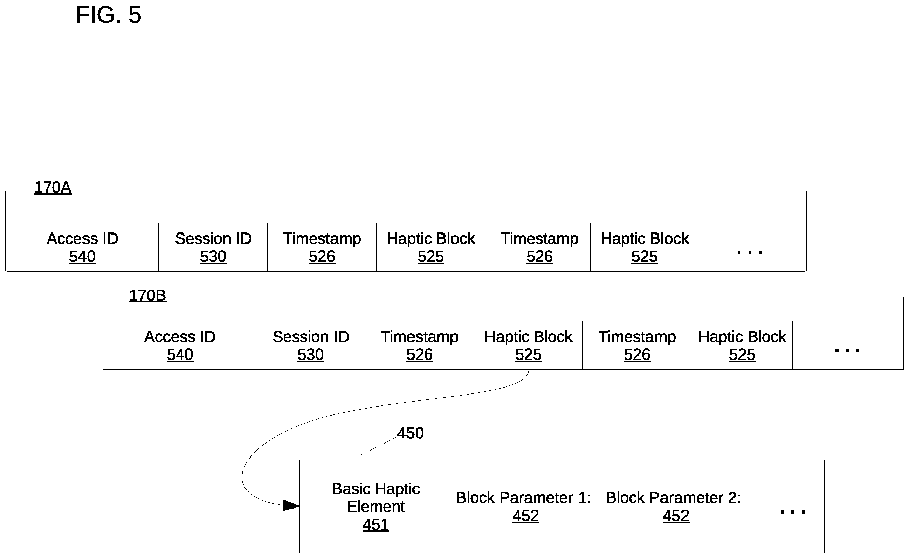

FIG. 5 illustrates the structure of haptic data units 170 generated by the encapsulating system 154. Haptic data units 170A, 170B each include a series of haptic blocks 525 and corresponding time stamps 526. As shown in FIG. 5, each haptic block includes a haptic block template 450, and block parameters 452 including repetitions and magnitude. In addition, each haptic data unit 170A, 170B includes an access identification or ID 540 and a session identification or ID 530.

With additional reference to FIG. 3, the haptic encoding system 153 generates, based on the master haptics library 190, a series of haptic blocks according to the haptic effect information 171. Each haptic block 525 is defined by a haptic block template 450, as discussed above. Each haptic block 525 includes a content identifier 191 identifying the haptic block template 450 and block parameters 452 modifying the basic haptic element ID 451 of the haptic block template 450 identified by the content identifier 191. A simple haptic effect may be represented by a haptic block 525. A haptic block template 450 having a basic haptic element ID 451 identifying the basic haptic element most closely corresponding to the haptic effect information 171 of the simple haptic effect is selected. Block parameters 452 are selected to correspond to the haptic effect information 171. For example, a haptic effect consisting of a half second vibration may be defined according to a haptic block template 450 having a resonant LRA vibration identified by a basic haptic element ID 451 and block parameters 452 defining a 50% magnitude and a suitable number of repetitions to generate a half second vibration. If the resonant LRA vibration basic haptic element ID 451 has a base duration of 50 milliseconds, then ten repetitions would be required for a half second vibration. The haptic encoding system 153 next attaches a timestamp 526 to the haptic block 525 to define the time at which the haptic block 525 is to be played within the context of the haptic effect information 171.

A more complex haptic effect may be represented by multiple haptic blocks 525. For example, a vibration that requires multiple differing magnitudes or frequencies may be represented by successive haptic blocks 525 having different magnitude parameters or basic haptic element IDs 451 representing basic haptic elements at differing frequencies. Another complex haptic effect may require multiple actuators operating in conjunction, and thus may be defined by multiple haptic blocks 525 defining basic haptic elements to be played by the multiple actuators. Multiple haptic blocks 525 may have the same time stamp 526 if the effects are intended to be played simultaneously.

The haptic encoding system 153 continues to generate additional haptic blocks 525, by selecting haptic block templates, block parameters, and time stamps according to the haptic effect information 171 received via the authoring user interface system 151. In embodiments, the haptic encoding system 153 encodes a stream or track of haptic effect information 171 after it has been completely authored and stored. In embodiments, the haptic encoding system 153 encodes haptic effect information 171 substantially while it is being authored. In embodiments, the haptic encoding system 153 encodes haptic effect information 171 in substantially real time, e.g., as the haptic effect information 171 is being authored or at substantially the same rate as it is authored.

The haptic encoding system 153 is thus able to encode haptic effect information 171 of a series of haptic effects as a successive series of haptic blocks 525. By using haptic blocks 525, which each represent small, simple, portions of larger and more complex haptic effects, a wide array of haptic effects can be encoded. Because the haptic blocks 525 represent the most basic effects of which haptic actuators are capable, a combination of blocks can be selected to define longer or more complex haptic effects that the actuators may be capable of.

The encapsulating system 154 is a software module operating on the haptic authoring system 100. The encapsulating system 154 encapsulates the encoded haptic blocks 525 along with their timestamps into a series of haptic data units for transmission to client haptic devices via a haptic server.

Each session ID 530 designates a complete haptic effect consisting of one or more haptic blocks 525 and corresponding timestamps 526. A complete haptic effect is a haptic effect intended by the haptic designer or author to be output as a single unit. If a portion of a complete haptic effect is not played, then the haptic designers intent for that effect is not met. For example, a complete haptic effect may include a series of vibration effects at different magnitudes punctuated by a final kinesthetic effect. Another example is a crescendo/decrescendo effect wherein a vibration effect increases in magnitude to a peak and then decreases in magnitude until it is complete. If a basic haptic element of the crescendo/decrescendo effect, i.e., a specific magnitude portion of the crescendo, were not output, it would compromise the intended effect. The series of haptic blocks 525 and timestamps 526 required to define the complete haptic effect may be encoded and assigned a session ID 530. Where data unit size limitations force a haptic effect to span multiple haptic data units 170A, 170B, a session ID 530 may be the same across the haptic data units 170A, 170B, permitting a decoder to reconstruct the entire complete haptic effect.

Each access ID 540 represents an access control designating a class of clients with permissions to receive the complete haptic effect designated by the session ID 530. Access IDs 540 are used to selectively distribute haptic effects according to access levels of clients. Access levels of clients may, for example, be based on subscriptions and/or other methods of classification. For example, a live stream artist that provides haptic effects with their video stream may provide one set of haptic effects for casual viewers and a second, more exclusive, set of haptic effects for subscribing viewers. In embodiments, an author of a series of complete haptic effects may designate specific effects to be received based on access identifications. In embodiments, a library or database of complete haptic effects from which a haptic effect author selects effects may include associated access identifications.

Returning now to FIG. 3, the authoring communications system 155 is a software module operating on the haptic authoring system 100. The authoring communications system 155 is configured to establish communications between the haptic authoring system 100 and the haptic server system 200. The established communication pathway may utilize any appropriate network transfer protocol, including, e.g., HTTP, TCP, UDP, etc.

The authoring communications system 155 transmits the haptic data units 170A, 170B, 170C, 170D as part of a haptics stream (e.g., master haptics stream 400) to the haptic server system 200 for eventual transmission to client haptic devices 300. The authoring communications system 155 is further configured to transmit an audiovisual stream 375 of audiovisual data to the haptic server system 200, where the audiovisual stream 375 corresponds to the master haptics stream 400. The timestamps 526 of the master haptics stream 400 may correspond to specific points in time of the audiovisual stream 375 at which the haptic effects are intended to be played.

In embodiments, the haptic authoring system 100 also transmits a master haptics sub-library 391 to the haptic server system 200. In embodiments, the master haptics sub-library 391 is transmitted at the outset, when communications are initially established between the haptic authoring system 100 and the haptic server system 200. The master haptics sub-library 391 is a portion or subset of the master haptics library 190 including the content identifiers 191 of all of the haptic block templates 450 that are used by the master haptics stream 400. The master haptics sub-library 391 is used to identify to the haptic server system 200 which haptic block templates 450 are used in the master haptics stream 400. In embodiments, the master haptics sub-library 391 may include all of the information pertaining to the content identifiers 191 and haptic block templates 450 of the master haptics stream 400, including information identifying the basic haptic element ID 451 of the haptic block template 450 as well as information identifying block parameters 452 associated with the basic haptic element ID 451 of the haptic block template. In embodiments, the master haptics sub-library 391 may include only information identifying the content identifiers 191 and haptic block templates 450 used by the master haptics stream 400. The information identifying the haptic block templates 450 is used by the haptic server system to determine the constituent parts of each haptic block template 450 that is used in the master haptics stream 400.

Referring now to FIG. 2, the haptic server system 200 receives the master haptics stream 400 and, optionally, the master haptics sub-library 391. The haptic server system 200 manages the one-to-many aspects of the haptics stream transmission system 10. The haptic server system 200 receives the master haptics stream 400 and generates from it a plurality of client haptics streams 401A, 401B, 401C. The client haptics streams 401A, 401B, 401C are generated according to access levels, capabilities, and preferences of the client haptic devices 300A, 300B, 300C. The client haptics streams 401A, 401B, 401C, are then sent to the respective client haptic devices 300A, 300B, 300C. The haptic server system 200 also provides, updates, or confirms the currency of the client haptics libraries 390A, 390B, 390C of the client haptic devices 300A, 300B, 300C.

FIG. 6 illustrates operation of the haptic server system 200. The haptic server system 200 is configured to receive the haptic data units 170A, 170B, 170C, 170D of the master haptics stream 400 encoded by the haptic authoring system 100 and transmit the haptic data units 170A, 170B, 170C, 170D to the appropriate client haptic devices 300A, 300B, 300C.

The server communications system 255 is a software module in operation on the haptic server system 200. The server communications system 255 manages all incoming and outgoing traffic from the haptic server system 200. The server communications system 255 is configured to establish and maintain communications with the client haptic devices 300A, 300B, 300C and the haptic authoring system 100. The server communications system 255 may establish communications via a local network, direction connection, and/or via the internet, using any suitable transmission protocol. In embodiments, the server communications system 255 is configured to establish communications via any appropriate network transfer protocol, including, e.g., HTTP, TCP, UDP, etc.

The client identification system 251 is a software module in operation on the haptic server system 200. The client identification system 251 is configured to identify and classify the connected client haptic devices 300A, 300B, 300C to determine a device identification of each client haptic device 300. The client identification system 251 is configured to identify, i.e., determine device identifications, the client haptic devices 300A, 300B, 300C by one or more client device characteristics after communication is established between the client haptic devices 300A, 300B, 300C and the haptic server system 200. Identification of the client device characteristics may be performed, for example, during a handshake process that occurs when communications are initialized. Client device characteristics include access level, capability, client preferences, and other characteristics that identify and define the client haptic devices 300A, 300B, 300C.

The client stream creation system 253 is configured to parse the master haptics stream 400 according to client access levels, as identified by the client identification system 251. As discussed above with respect to FIG. 5, each encoded haptic effect includes an access ID 540 representing an access control identification. The client stream creation system 253 generates client haptics streams 401A, 401B, 401C according to the access IDs 540 of the complete haptic effects, as identified by session IDs 530, parsed from the master haptics stream 400. Each of the complete haptic effects identified by session IDs 530 assigned to a given client haptics stream 401A, 401B, 401C is designated for access by client haptic devices 300A, 300B, 300C having a specific access level. Thus, each haptic effect may be assigned to more than one client haptics stream 401A, 401B, 401C. For example, a haptic data unit 170 having an access ID 540 designating it as accessible to all clients may be assigned to each client haptics stream 401A, 401B, 401C. A haptic data unit 170 having a more restricted access level may be assigned to client haptics streams 401A, 401B, 401C only available to client haptic devices 300A, 300B, 300C having elevated levels of access. Haptic effects may be classified according to multiple levels of access, based on, for example, subscription payments, membership agreements, reputation rankings, and other factors. In an embodiment, the client stream creation system 253 generates haptics streams according to each level of client access that is permitted. The server communications system 255 is configured to transmit each of client haptics stream 401A, 401B, 401C to the appropriate client haptic devices 300A, 300B, 300C based on the access level of the client haptic devices 300A, 300B, 300C. In embodiments, the client stream creation system 253 removes the access ID 540 information associated with each session ID 530 when creating the client haptics streams 401A, 401B, 401C.

For example, the haptic data unit 170B, as illustrated in FIG. 6, includes exclusive haptic content available only to subscribers, such as haptic client device 300C. The haptic data unit 170B therefore has an access ID designating it as available only to subscribing clients. The haptic data units 170A, 170C, 170D are designated by access IDs as available to all clients. Thus, the client haptics stream 401C includes the haptic data unit 170B while the client haptics streams 401A, 401B do not.

The server communications system 255 is further configured to supply, update, or confirm client haptics libraries 390A, 390B, 390C according to the characteristics of the connected client haptic devices 300A, 300B, 300C, as identified by the client identification system 251. The characteristics of the client haptic devices 300A, 300B, 300C include the haptic capability of the client haptic devices 300A, 300B, 300C, and may be defined by the model number and/or type of client haptic device 300A, 300B, 300C. After communication is established between the client haptic devices 300A, 300B, 300C, and the haptic server system 200, the server communications system 255 ensures that each client haptic device 300A, 300B, 300C has an up-to-date client haptics library 390A, 390B, 390C specific for the model and type of client haptic device. This may include transmitting a client haptics library 390A, 390B, 390C if the client haptic device 300A, 300B, 300C does not have one, updating a client haptics library 390A, 390B, 390C that is out of date, and/or confirming that a client haptics library 390A, 390B, 390C is up-to-date. The structure of the client haptics libraries 390 is discussed above, with respect to FIG. 4. As discussed above, the server communications system 255 may transmit a complete device specific sub-library 291 as the client haptics library 390 or may transmit a partial copy of a device specific sub-library 291 as the client haptics library 390. A partial copy of the device specific sub-library 291 may be selected according to the content identifiers 191 of the master haptics stream 400. In embodiments, a partial copy of the device specific sub-library 291 may be selected according to the content identifiers 191 of a specific client haptics stream 401A, 401B, 401C, e.g., as reduced from the master haptics stream 400 based on client access levels.

In operation, the haptic server system 200 performs as follows. When a client haptic device 300A, for example, establishes communication with the haptic server system 200 via the server communications system 255, the device characteristics of the client haptic device 300A are identified by the client identification system 251. Based on the identified capabilities of the client haptic device 300A, e.g., the device model or type, the server communications system 255 then either transmits client haptics library 390A to client haptic device 300A, transmits client haptic device 300A an update to the previously stored client haptics library 390A, or confirms with the client haptic device 300A that the previously stored client haptics library 390A is up-to-date. The client identification system 251 identifies the access levels of the client haptic device 300A. The server communication system 255 then transmits the client haptics streams 401A associated with the access level of the client haptic device 300A to the client haptic device 300A.

Returning now to FIG. 2, the multiple client haptic devices 300A, 300B, 300C, each receive a respective client haptics stream 401A, 401B, 401C and respective client haptics libraries 390A, 390B, 390C. The client haptic devices 300A, 300B, 300C decode the client haptics streams 401A, 401B, 401C and provide a stream of haptic outputs via the haptic output devices 330A, 330B, 330C.

FIGS. 7A and 7B illustrate an end-to-end haptics stream transmission from a haptic authoring system to client haptic devices according to an embodiment. The haptic authoring system 100 transmits a master haptics stream 400 to the haptic server system 200. FIGS. 7A and 7B illustrate a plurality of haptic data units 170, designated individually as haptic data units 700A, 700B, 700C, 700D, 700E. Each of the haptic data units 700A, 700B, 700C, 700D, 700E includes an access ID 540, a session ID 530, and one or more haptic blocks 525 (not shown) and associated timestamps 526 (not shown). As illustrated in FIGS. 7A and 7B, haptic data units 700A and 700C include "B" access IDs 540 corresponding to the access level of client haptic device 300B, while haptic data units 700A, 700B, 700D, and 700E include "C" access IDs 540 corresponding to the access level of client haptic device 300C. Accordingly, haptic data units 700A and 700C are packaged into client haptics stream 401B and transmitted to client haptic device 300B, while haptic data units 700A, 700B, 700D and 700E are packaged into client haptics stream 401C and transmitted to client haptic device 300C. Upon receipt of the respective client haptics streams 401B, 401C, the client haptic devices 300B, 300C decode the received haptic data units 170 and playback the encoded haptic effects at the appropriate times according to the timestamps 526.

As illustrated by FIGS. 7A and 7B, haptic data units 700B, 700D, and 700E share a session ID 530 of "1." Thus, while the haptic effect is spread across multiple haptic data units 700B, 700D, 700E, it will be rebuilt into a single complete haptic effect by the client haptic device 300C when received. The haptic effects of the haptic data units 700A and 700C are contained entirely within each of the haptic data units 700A and 700C.

As illustrated by FIGS. 7A and 7B, access IDs 540 may be mutually exclusive between different client haptic devices 300. That is, client access levels are not required to be hierarchical, where each higher level includes access to the haptic effects of all of the levels below. As shown in FIGS. 7A and 7B, there are haptic effects that are available to a first client and not a second, while other haptic effects are available to the second client but not the first.

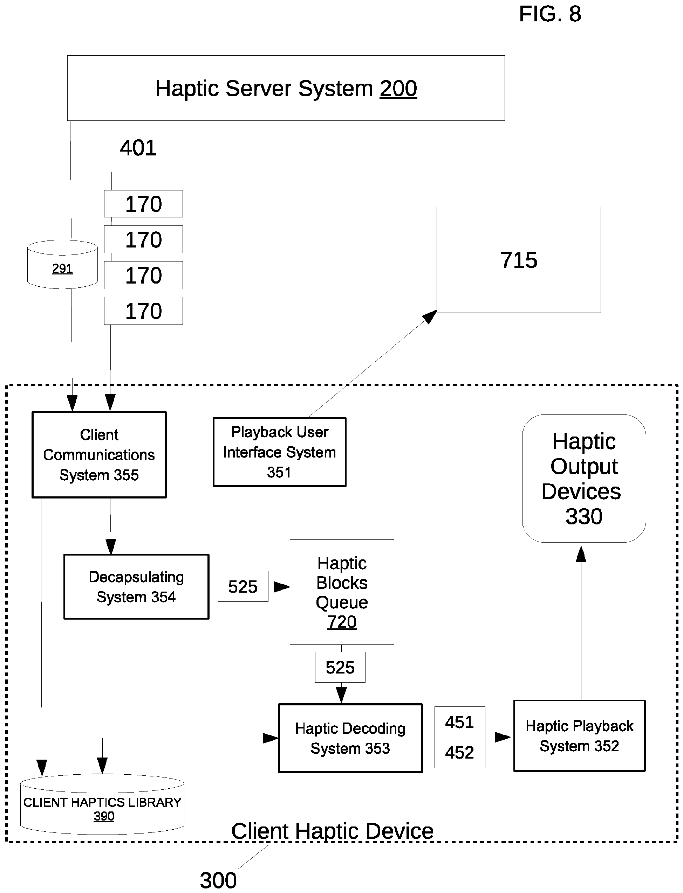

FIG. 8 illustrates operation of a client haptic device 300. The client haptic device 300 is configured to receive and decode haptic data units 170 of a client haptics stream 401 and play back the effects. The client haptic device 300 includes at least a processor 310 (not shown in FIG. 8), at least one storage device 320 (not shown in FIG. 8), and at least one haptic output device 330. The storage device 320 is configured to store software instructions for carrying out the operations of a playback user interface system 351, a haptic playback system 352, a haptic decoding system 353, a decapsulating system 354, and a client communications system 355.

The playback user interface system 351 is a software module in operation on the client haptic device 300. The playback user interface system 351 is configured to provide a user interface 715 for the client haptic device 300. The user interface may be visual, e.g., provided via a display screen or touchscreen, may be tactile, e.g., provided via buttons, switches, or the like, may be audible, e.g., provided via audio output and audio input, and/or may be virtual, e.g., provided via a virtual, augmented, or mixed reality interface. The user interface is configured to permit a user to interact with, e.g., play, pause, stop, select tracks, etc., media content, including haptic content.

The client communications system 355 is a software module in operation on the client haptic device 300. The client communications system 355 manages all incoming and outgoing data traffic from the client haptic device 300. The client communications system 355 is configured to establish and maintain communications with the haptic server system 200. The client communications system 355 may establish communications via a local network, direction connection, and/or via the internet, using any suitable transmission protocol, including, e.g., HTTP, TCP, UDP, etc.

The client communications system 355 is configured to receive the device specific sub-library 291 transmitted by the haptic server system 200 and store the device specific sub-library 291 as the client haptics library 390. The client communications system 355 is further configured to update the client haptics library 390 and/or to confirm that the client haptics library 390 is up-to-date based on the received device specific sub-library 291. The client communications system 355 is further configured to receive the client haptics stream 401, comprising haptic data units 170, from the haptic server system 200.

The decapsulating system 354 is a software module in operation on client haptic device 300. The decapsulating system 354 is configured to decapsulate the client haptics stream 401. Decapsulating the client haptics stream 401 includes removing header and address information from the client haptics stream 401 to extract the haptic blocks 525, along with their timestamps 526 and session IDS 520. The decapsulating system 354 moves the haptic blocks 525 of the client haptics stream 401 to a haptic blocks queue 720 and stores the haptic blocks 525 in the haptic blocks queue 720 according to the session IDs 530. As discussed above, each session ID 530 represents a complete haptic effect to be delivered. The haptic blocks queue 720 stores the timestamps 526 and haptic blocks 525 of each session ID 530 together so that the haptic decoding system 353 can pull information necessary for a complete haptic effect from the haptic blocks queue 720 as required according to the timestamps. In an embodiment the haptic blocks 525 are stored in the haptic blocks queue 720 in the order that they are to be played.

Communications protocols suitable for streaming are often lossy protocols. For example, the UDP protocol does not include any mechanisms for recovering lost data units. When data units are lost or received out of order, they are ignored. This is valuable in a streaming format because it is more important to continue the stream, even with losses, than it is for the transmission to be perfect. In an embodiment, the haptics stream transmission system 10 accounts for potential data unit loss or late arrival by discarding haptic blocks 525 that are received out of order.

The haptic decoding system 353 is a software module in operation on client haptic device 300. The haptic decoding system 353 pulls the collection of haptic blocks 525 associated with each session ID 530 from the haptic blocks queue 720 according to the timestamps of the haptic blocks 525. The haptic decoding system 353 determines the content identifier 191 of each successive haptic block 525. The haptic decoding system 353 accesses the client haptics library 390 to determine the haptic block template 450 associated with the content identifier. The haptic decoding system 353 identifies the basic haptic element identified by the basic haptic element ID 451 associated with the selected haptic block template 450 and applies the block parameters 452 associated with the content identifier 191 to the basic haptic element. The haptic decoding system 353 builds the complete haptic effect associated with each session ID 530 from the basic haptic element IDs 451 and their corresponding block parameters 452, e.g., repetition and magnitude. The haptic decoding system 353 then passes the basic haptic effects defined by the basic haptic element IDs 451 and block parameters 452 of each decoded haptic effect to the haptic playback system 352.

The haptic decoding system 353 of the client haptic device 300 decodes each complete haptic effect according to the local client haptics library 390. Thus, the haptic effects of the client haptics streams 401 are translated to haptic effects which the client haptic device 300 is capable of outputting. Different client haptic devices 300 with equivalent access levels and receiving identical client haptics streams 401 may generate different complete haptic effects based on the specific actuators and capabilities of the different client haptic devices 300. The local client haptics libraries 390, which permit the generation of client specific haptic effects according to universal content identifiers 191 permit the haptic designer to create a single haptic track or stream to be played by many different client haptic devices 300 according to their individual capabilities.

The haptic playback system 352 is a software module in operation on the client haptic device 300. The haptic playback system 352 receives the complete haptic effects as generated by the haptic decoding system 353. The haptic playback system 352 is configured to send or cause the sending of haptic command signals to the haptic output devices 330 of the haptic client device 300 based on the complete haptic effects received from the haptic decoding system 353. The haptic command signals include electrical control signals configured to cause the haptic output devices 330 to output haptic effects according to the complete haptic effects generated for each session ID 530. In embodiments, the haptic playback system 352 is configured to send haptic command signals to the haptic output devices 330 according to the specific capabilities of the haptic output devices 330.

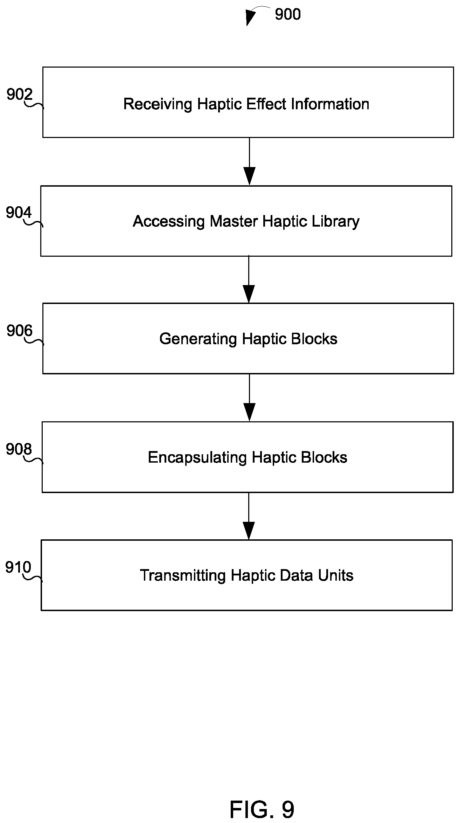

FIG. 9 is a flow chart showing a process 900 of encoding haptic inputs for transmission. The process 900 is performed on a computer system having one or more physical processors programmed with computer program instructions that, when executed by the one or more physical processors, cause the computer system to perform the method. The one or more physical processors are referred to below as simply the processor. In embodiments, the process 900 is carried out via the haptic authoring system 100 as described herein. The haptic authoring system 100 represents an example of a hardware and software combination configured to carry out process 900, but implementations of the process 900 are not limited to hardware and software combination of the haptic authoring system 100. Additional details regarding each of the operations of the method may be understood according to the description of haptics stream transmission system 10, as described above.

In an operation 902, the process 900 includes receiving, via a processor, haptic effect information. The haptic effect information may be received from a user via a haptic input device and/or may be received from a storage location, such as a local computer memory, a removable or portable computer memory, and/or a networked computer memory. The haptic input device may include traditional computer interface tools such as keyboards and mice used to select parameters of haptic effects via a computer interface. The haptic input device may further include computer interface tools capable of receiving gestures, such as touchscreens, mice, cameras, etc., that permit the haptic effect information to be generated according to input gestures of a user. The haptic effect information includes data describing haptic effects as originally designed by the author of the haptic effects.

In an operation 904, the process 900 includes accessing a master haptics library. The master haptics library is accessed by the processor for the purpose of encoding the haptic effect information. The master haptics library includes associations between content identifiers and designed haptic effects. The designed haptic effects are defined by haptic block templates, which each including a basic haptic element and one or more haptic block parameters to be applied to the basic haptic element, such as magnitude and repetition number.

In an operation 906, the process 900 includes generating haptic blocks according to the haptic block templates of the master haptics library and based on the haptic effect information. Based on the haptic effect information, an appropriate haptic block template 450 is selected from the master haptics library. Based on the haptic effect information, block parameters are determined. The block parameters may include, for example, magnitude and repetition number. Each generated haptic block includes a content identifier that identifies the haptic block template and one or more haptic block parameters. Each haptic block is then timestamped according to the haptic effect information, where the timestamp indicates a time in a haptics stream at which the effects of the haptic block are to be played.

In an operation 908, the process 900 includes encapsulating the haptic blocks. Encapsulating the haptic blocks includes storing the haptic blocks and time stamps as data units for a haptics stream. Encapsulating the haptic blocks includes identifying all of the haptic blocks of a single complete haptic effect with a session identification. Encapsulating the haptic blocks further includes determining an access identification to associate with each complete haptic effect, where the access identification indicates a client access level required to receive the associated complete haptic effect. The session identifications and access identifications are then encapsulated with the haptic blocks to generate haptic data units. The haptic data units are then provided with the appropriate headers and wrappers for transmission according to a selected transmission protocol.

In an operation 910, the process 900 includes transmitting the haptic data units to a haptic server for distribution. The haptic data units are transmitted as part of a haptics stream for eventual distribution to one or more client haptic devices. In embodiments, an audiovisual stream corresponding to the haptics stream is also transmitted by the haptic authoring system. In such embodiments, the timestamps of the haptics stream are used to synchronize playback of the haptic blocks with the audiovisual stream. In embodiments, the haptic authoring system is configured to generate a master haptics sub-library based on the master haptics library and the selected haptic block templates of the haptics stream, wherein the master haptics sub-library includes the portions of the master haptics library associated with the selected haptic block templates. The master haptics sub-library is transmitted to the haptic server system before, after, or during transmission of the master haptics stream.

The above describes an illustrative flow of an example process 900 of encoding haptic inputs for transmission according to embodiments described herein. The process as illustrated in FIG. 9 is exemplary only, and variations exist without departing from the scope of the embodiments disclosed herein. The steps may be performed in a different order than that described, additional steps may be performed, and/or fewer steps may be performed.

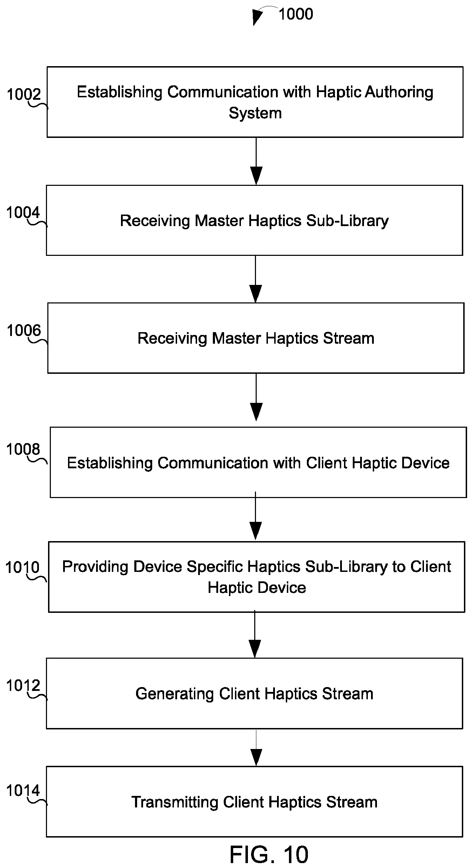

FIG. 10 is a flow chart showing a process 1000 of transmitting a stream of haptic effects to a client haptic device. The process 1000 is performed on a computer system having one or more physical processors programmed with computer program instructions that, when executed by the one or more physical processors, cause the computer system to perform the method. The one or more physical processors are referred to below as simply the processor. In embodiments, the process 1000 is carried out via the haptic server system 200 as described herein. The haptic server system 200 represents an example of a hardware and software combination configured to carry out the process 1000, but implementations of the process 1000 are not limited to hardware and software combination of the haptic server system 200. Additional details regarding each of the operations of the method may be understood according to the description of the haptics stream transmission system 10, as described above.

In an operation 1002, the process 1000 includes establishing communication between a haptic server system and a haptic authoring system. Communication may be established via any suitable network transmission protocol, including, e.g., HTTP, TCP, UDP, etc.

In an operation 1004, the process 1000 includes receiving from the haptic authoring system a master haptics sub-library. The haptic server system receives a master haptics sub-library from the haptic authoring system. The master haptics sub-library includes a portion of the content identifiers and associated designed haptic effects from a master haptics library. The portion is selected according to the content identifiers used by a master haptics stream to be transmitted from the haptic authoring system to the haptic server system. In embodiments, optionally no library is required to be transmitted between the haptic authoring system and the haptic server system because the haptic server system already stores a copy of the master haptics library. In embodiments, the haptic authoring system and the haptic server system may communicate to determine whether a copy of the master haptics library stored on the haptic server system is up to date.

In an operation 1006, the process 1000 includes receiving a master haptics stream from the haptic authoring system. The master haptics stream is a stream of haptic blocks and timestamps, each associated with a corresponding session identification and access identification. The master haptics stream represents a series of haptic effects as originally designed by the author of the haptic effects.

In an operation 1008, the process 1000 includes establishing communication with a client haptic device. Communication may be established via any suitable network transmission protocol, including, e.g., HTTP, TCP, UDP, etc.

In an operation 1010, the process 1000 includes providing to the client haptic device a device specific haptics sub-library determined according to a device identification of the client haptic device. The device identification of the client haptic device is determined by the haptic server system according to the characteristics of the client haptic device, as discussed above. The haptic server system stores a device haptics library that includes a collection of device specific haptics sub-libraries. Each device specific sub-library is associated with a particular type or model of client haptic device. The device specific haptics library for transmission is selected from the device specific sub-libraries of the device haptics library according to the device identification indicating the model or type of client haptic device. In embodiments, the device specific haptics sub-library sent to a client haptic device is further refined to only include the content identifiers associated with the client haptics stream to be sent to the client haptic device.

In an operation 1012, the process 1000 includes generating one or more client haptics streams from the master haptics stream. The haptic server system parses the master haptics stream into one or more client haptics streams by selecting haptic effects from the master haptics stream according to account identifications of the client haptic devices. The account identifications of the client haptic devices indicate the access identifications that each client haptic device has access to. As discussed above, haptic blocks representing a complete haptic effect are encoded under a session identification and an access identification. The access identification indicates a level of client access required by a client haptic device to receive the complete haptic effect. The level of client access may be identified by an account identification of each client haptic device. The haptic server system constructs one or more client haptics streams for different client access levels by selecting, for each client haptics stream, only those haptic blocks having access identifications corresponding to the appropriate account identification, i.e., level of client access. In embodiments, the haptic server system generates a client haptics stream for each possible level of client access and matches a generated client haptics stream to a client haptic device once the client haptic device is identified.

In an operation 1014, the process 1000 includes transmitting the client haptics stream to the client haptic device. In embodiments, one or more client haptics streams are transmitted to the corresponding one or more client haptic devices. Because the client haptics streams are generated based on client account identifications that indicate access levels and may be the same between multiple client haptic devices, more than one client haptic device may receive the same client haptics stream.

The above describes an illustrative flow of an example process 1000 of transmitting haptics streams to client haptic devices according to embodiments described herein. The process as illustrated in FIG. 10 is exemplary only, and variations exist without departing from the scope of the embodiments disclosed herein. The steps may be performed in a different order than that described, additional steps may be performed, and/or fewer steps may be performed.

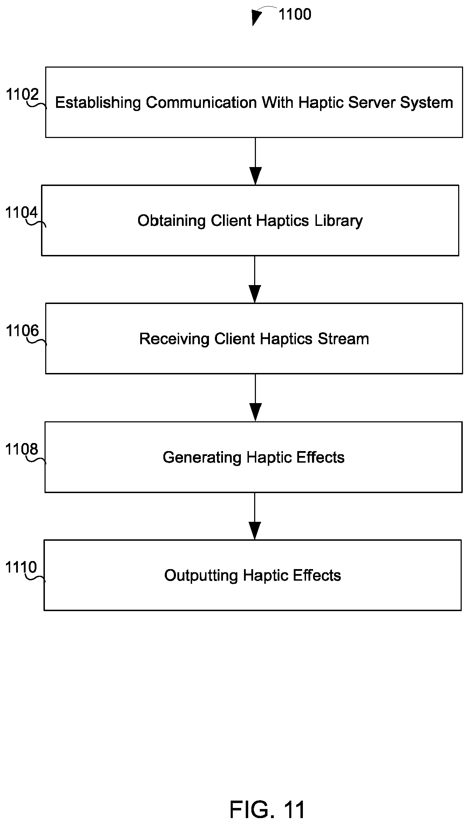

FIG. 11 is a flow chart showing a method of receiving and decoding a stream of haptic effects for playback. The process 1100 is performed on a computer system having one or more physical processors programmed with computer program instructions that, when executed by the one or more physical processors, cause the computer system to perform the method. The one or more physical processors are referred to below as simply the processor. In embodiments, the process 1100 is carried out via the client haptic device 300 as described herein. The client haptic device 300 represents an example of a hardware and software combination configured to carry out the process 1100, but implementations of the process 1100 are not limited to hardware and software combination of the client haptic device 300. Additional details regarding each of the operations of the method may be understood according to the description of haptics stream transmission system 10, as described above.

In an operation 1102, the process 1100 includes establishing communication with a haptic server system. The communication link between the client haptic device and the haptic server system may be established according to any suitable transmission protocol including, e.g., HTTP, TCP, UDP, etc.

In an operation 1104, the process 1100 includes obtaining a client haptics library from the haptic server system. The client haptic device supplies the haptic server with a device identification and, in return, the haptic server transmits a client haptics library generated according to the device identification to the client haptic device. The device identification of the client haptic device is determined by the haptic server system according to the characteristics of the client haptic device, as discussed above. The client haptics library is optimized for the client haptic device based on the capabilities of the client haptics device, as identified by the device identification. The client haptics library includes associations between content identifiers and corresponding haptic effects capable of being played by the one or more actuators of the client haptic device. In embodiments, the client haptics library may be generated according to the haptic blocks included within the client haptics stream.

In an operation 1106, the process 1100 includes receiving a client haptics stream from the haptic server. The client haptics stream includes a plurality of haptic blocks and a corresponding plurality of timestamps. Each haptic block includes a content identifier and haptic block parameters. Each haptic block is associated with a session identification. Together, the collection of haptic blocks associated with a given session identification represent a complete haptic effect.

In an operation 1108, the process 1100 includes generating a plurality of haptic effects for playback on one or more actuators of the client haptic device. The haptic effects are generated from the haptic blocks of the client haptics stream. The content identifiers of the haptic blocks serve as an index to the client haptics library to identify the haptic block template called for by the haptic block. The haptic block parameters are applied to a basic haptic element associated with the haptic block template identified by the content identifier. The combination of the basic haptic element and the haptic block parameters provide a basic haptic effect. Combining all of the basic haptic effects decoded from the haptic blocks associated with a given session identification according to their timestamps produces a complete haptic effect.

In an operation 1110, the process 1100 includes outputting the plurality of haptic effects to the one or more actuators of the client haptic device. The client haptic device outputs the generated haptic effects, either in the form of the basic haptic effects or all together in the form of the complete haptic effects, to one or more actuators associated with the client haptic device.

The above describes an illustrative flow of an example process 1100 of receiving haptics streams and playing back the haptic effects encoded therein. The process as illustrated in FIG. 11 is exemplary only, and variations exist without departing from the scope of the embodiments disclosed herein. The steps may be performed in a different order than that described, additional steps may be performed, and/or fewer steps may be performed.

Thus, there is provided systems, devices, and methods of encoding, transmitting, decoding, and playing back haptic effects. While various embodiments according to the present invention have been described above, it should be understood that they have been presented by way of illustration and example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments but should be defined only in accordance with the appended claims and their equivalents. It will also be understood that each feature of each embodiment discussed herein, and of each reference cited herein, can be used in combination with the features of any other embodiment. Stated another way, aspects of the above methods of rendering haptic effects may be used in any combination with other methods described herein or the methods can be used separately. All patents and publications discussed herein are incorporated by reference herein in their entirety.

Additional discussion of various embodiments:
Embodiment 1 is computer implemented method of encoding haptic inputs for transmission, the method being performed on a computer system having one or more physical processors programmed with computer program instructions that, when executed by the one or more physical processors, cause the computer system to perform the method, the method comprising:
   - accessing a master haptics library storing associations between content identifiers and designed haptic effects, the designed haptic effects including a first haptic block template and a second haptic block template;
   - receiving haptic effect information;
   - generating, from the master haptics library, a first haptic block according to the first haptic block template based on the haptic effect information;
   - attaching a first timestamp to the first haptic block according to the haptic effect information;
   - generating, from the master haptics library, a second haptic block according to the second haptic block template based on the haptic effect information;
   - attaching a second timestamp to the second haptic block according to the haptic effect information;
   - encapsulating the first haptic block and the first timestamp with the second haptic block and the second timestamp into a haptic data unit; and
   - transmitting the haptic data unit to a haptic server system for distribution to one or more client haptic devices.
Embodiment 2 is the method of embodiment 1, further comprising encapsulating a session identification into the haptic data unit, the session identification representing a complete haptic effect comprising the first haptic block and the second haptic block.
Embodiment 3 is the method of embodiment 2, further comprising encapsulating an access identification into the haptic data unit associated with the session identification, the access identification representing a plurality of clients selected to receive the complete haptic effect.
Embodiment 4 is the method of any of embodiments 1-3, further comprising: transmitting the haptic data unit as part of a haptics stream; and transmitting an audiovisual stream corresponding to the haptics stream.
Embodiment 5 is the method of any of embodiments 1-4, wherein the first haptic block template includes a basic haptic element and at least one block parameter.
Embodiment 6 is the method of any of embodiments 1-5, wherein generating the first haptic block according to the first haptic block template includes selecting a number of repetitions and a magnitude as the at least one block parameter.
Embodiment 7 is the method of any of embodiments 1-6, wherein the haptic effect information is received from a storage location.
Embodiment 8 is the method of any of embodiments 1-7, wherein the haptic effect information is generated according to input gestures of a user.
Embodiment 9 is the method of any of embodiments 1-8, further comprising generating a master haptics sub-library based on the master haptics library, the first haptic block template of the first haptic block, and the second haptic block template of the second haptic block; and transmitting the master haptics sub-library to the haptic server system.
Embodiment 10 is a system for encoding and transmitting a stream of haptic effects, the system comprising:
   - one or more processors; and
   - a storage device storing instructions that, when executed by the one or more processors, cause the system to
   - access a master haptics library storing a plurality of haptic block templates, each haptic block template representing a basic haptic element and having block parameters,
   - receive haptic effect information,
   - generate, from the master haptics library, a first haptic block having a first haptic block template and first block parameters according to the haptic effect information,
   - attach a first timestamp to the first haptic block according to the haptic effect information,
   - generate, from the master haptics library, a second haptic block having a second haptic block template and second block parameters according to the haptic effect information,
   - attach a second timestamp to the second haptic block according to the haptic effect information,
   - encapsulate the first haptic block and the first timestamp with the second haptic block and the second timestamp into a haptic data unit, and
   - transmit the haptic data unit to a haptic server system for distribution to one or more client haptic devices.
Embodiment 11 is the system of embodiment 10, wherein the one or more processors are further configured to cause the system to encapsulate a session identification into the haptic data unit, the session identification representing a complete haptic effect comprising the first haptic block and the second haptic block.
Embodiment 12 is the system of embodiment 11, wherein the one or more processors are further configured to cause the system to encapsulate an access identification into the haptic data unit associated with the session identification, the access identification representing a class of clients selected to receive the complete haptic effect.
Embodiment 13 is the system of any of embodiments 10-12, wherein the one or more processors are further configured to cause the system to transmit the haptic data unit as part of a haptics stream, and transmit an audiovisual stream corresponding to the haptics stream.
Embodiment 14 is the system of any of embodiments 10-13, wherein the first and second block parameters include magnitude and repetitions.
Embodiment 15 is the system of any of embodiments 10-14, wherein the basic haptic element comprises an actuator activation of less than approximately 200ms.
Embodiment 16 is the system of any of embodiments 10-15, wherein the haptic effect information is received from a storage location.
Embodiment 17 is the system of any of embodiments 10-16, wherein the haptic effect information is generated according to input gestures of a user.
Embodiment 18 is the system of any of embodiments 10-17, wherein the one or more processors are further configured to cause the system to generate a master haptics sub-library based on the master haptics library, the first haptic block template of the first haptic block, and the second haptic block template of the second haptic block, and transmit the master haptics sub-library to the haptic server system.
Embodiment 19 is a computer implemented method of transmitting a stream of haptic effects, the method being performed on a haptic server having one or more physical processors programmed with computer program instructions that, when executed by the one or more physical processors, cause the haptic server to perform the method, the method comprising:
   - establishing communication with a haptic authoring system;
   - receiving from the haptic authoring system a master haptics sub-library comprising a subset of a master haptics library stored on the haptic authoring system;
   - establishing communication with a client haptic device;
   - accessing a device haptics library;
   - providing to the client haptic device a device specific haptics sub-library from the device haptics library according to a device identification of the client haptic device and the master haptics sub-library;
   - receiving a master haptics stream from the haptic authoring system;
   - generating a client haptics stream from the master haptics stream; and
   - transmitting the client haptics stream to the client haptic device.
Embodiment 20 is the method of embodiment 19, wherein generating the client haptics stream includes selecting haptic data units from the master haptics stream according to an account identification of the client haptic device.
Embodiment 21 is the method of embodiment 20, wherein the client haptic device is a first client haptic device, the device specific haptics sub-library is a first device specific haptics sub-library, the device identification is a first device identification, the client haptics stream is a first client haptics stream, and the account identification is a first account identification, the method further comprising: establishing communication with a second client haptic device; providing to the second client haptic device a second device specific haptics sub-library determined according to a second device identification of the second client haptic device; generating the first client haptics stream by selecting haptic data units of the master haptics stream according to a first account identification of the first client haptic device; generating a second client haptics stream by selecting haptic data units of the master haptics stream according to the second account identification of the second client haptic device; and transmitting the second client haptics stream to the second client haptic device.
Embodiment 22 is a haptic server system for transmitting a stream of haptic effects, the haptic server system comprising:
   - one or more processors; and
   - a storage device storing instructions that, when executed by the one or more processors, cause the system to
   - establish communication with a haptic authoring system,
   - receive from the haptic authoring system a master haptics sub-library comprising a subset of a master haptics library stored on the haptic authoring system;
   - establish communication with a client haptic device,
   - access a device haptics library;
   - provide to the client haptic device a device specific haptics sub-library from the device haptics library determined according to a device identification of the client haptic device and the master haptics sub-library,
   - receive a master haptics stream from the haptic authoring system,
   - generate a client haptics stream, and
   - transmit the client haptics stream to the client haptic device.
Embodiment 23 is the system of embodiment 22, wherein to generate the client haptics stream, the one or more processors are further configured to cause the system to select haptic data units from the master haptics stream according to an account identification of the client haptic device.
Embodiment 24 is the system of embodiment 23, wherein the client haptic device is a first client haptic device, the device specific haptics sub-library is a first device specific haptics sub-library, the device identification is a first device identification, the client haptics stream is a first client haptics stream, and the account identification is a first account identification, and wherein the one or more processors are further configured to cause the system to establish communication with a second client haptic device, provide to the second client haptic device a second device specific haptics sub-library determined according to a second device identification of the second client haptic device and the master haptics sub-library, generate the first client haptics stream by selecting haptic data units of the master haptics stream according to a first account identification of the first client haptic device, generate a second client haptics stream by selecting haptic data units of the master haptics stream according to a second account identification of the second client haptic device, and transmit the second client haptics stream to the second client haptic device.
Embodiment 25 is a computer implemented method of decoding a client haptics stream for playback, the method being performed on a client haptic device having one or more physical processors programmed with computer program instructions that, when executed by the one or more physical processors, cause the client haptic device to perform the method, the method comprising:
   - establishing communication with a haptic server system;
   - obtaining a client haptics library from the haptic server, wherein the client haptics library is generated by the haptic server system according to a device identification of the client haptic device;
   - receiving, by the client haptic device, a client haptics stream from the haptic server system, the client haptics stream comprising a plurality of haptic blocks and a corresponding plurality of timestamps;
   - generating a plurality of haptic effects for playback on one or more haptic output devices of the client haptic device, each haptic effect selected from the client haptics library according to a content identifier of a corresponding haptic block from the client haptics stream to be played back at a time in accordance with a timestamp of the corresponding haptic block; and
   - outputting the plurality of haptic effects to the one or more haptic output devices of the client haptic device.
Embodiment 26 is the method of embodiment 25, wherein the client haptics library includes associations between content identifiers and corresponding haptic effects capable of being played by the one or more haptic output devices of the client haptic device.
Embodiment 27 is the method of embodiment 26, wherein the client haptics library is generated according to the haptic blocks included within the client haptics stream.
Embodiment 28 is the method of any of embodiments 25-27, further comprising assigning each of the plurality of haptic effects to the one or more haptic output device for playback according to capabilities of the one or more haptic output devices.
Embodiment 29 is a client haptic device for decoding a client haptics stream for playback, the client haptic device comprising one or more processors; and a storage device storing instructions that, when executed by the one or more processors, cause the client haptic device to establish communication with a haptic server, obtain a client haptics library from the haptic server, wherein the client haptics library is generated by the haptic server according to a device identification of the client haptic device, receive the client haptics stream from the haptic server, the client haptics stream comprising a plurality haptic blocks and a corresponding plurality of timestamps, generate a plurality of haptic effects for playback on a haptic output device of the client haptic device, each haptic effect selected from the client haptics library according to a corresponding haptic block from the client haptics stream to be played back at a time in accordance with a timestamp of the corresponding haptic block, and output the plurality of haptic effects to the haptic output device of the client haptic device.
Embodiment 30 is the client haptic device of embodiment 29, wherein the client haptics library includes associations between haptic blocks and corresponding haptic effects capable of being played by the haptic output device of the client haptic device.
Embodiment 31 is the client haptic device of embodiment 30, wherein the client haptics library is generated according to the haptic blocks included within the client haptics stream.
Embodiment 32 is the client haptic device of embodiment 29, wherein the one or more processors are further configured to cause the system to assign each of the plurality of haptic effects to the haptic output device for playback according to capabilities of the haptic output device.

## Claims

1. A computer implemented method of encoding haptic inputs for transmission, the method being performed on a computer system having one or more physical processors programmed with computer program instructions that, when executed by the one or more physical processors, cause the computer system to perform the method, the method comprising:
accessing a master haptics library storing associations between content identifiers and designed haptic effects, the designed haptic effects including a first haptic block template and a second haptic block template;
receiving haptic effect information;
generating, from the master haptics library, a first haptic block according to the first haptic block template based on the haptic effect information;
attaching a first timestamp to the first haptic block according to the haptic effect information;
generating, from the master haptics library, a second haptic block according to the second haptic block template based on the haptic effect information;
attaching a second timestamp to the second haptic block according to the haptic effect information;
encapsulating the first haptic block and the first timestamp with the second haptic block and the second timestamp into a haptic data unit; and
transmitting the haptic data unit to a haptic server system for distribution to one or more client haptic devices.

2. The method of claim 1, further comprising encapsulating a session identification into the haptic data unit, the session identification representing a complete haptic effect comprising the first haptic block and the second haptic block; and
further comprising encapsulating an access identification into the haptic data unit associated with the session identification, the access identification representing a plurality of clients selected to receive the complete haptic effect.

3. The method of claim 1, wherein the first haptic block template includes a basic haptic element and at least one block parameter; and wherein generating the first haptic block according to the first haptic block template includes selecting a number of repetitions and a magnitude as the at least one block parameter.

4. The method of claim 1, further comprising generating a master haptics sub-library based on the master haptics library, the first haptic block template of the first haptic block, and the second haptic block template of the second haptic block; and
transmitting the master haptics sub-library to the haptic server system.

5. A system for encoding and transmitting a stream of haptic effects, the system comprising:
one or more processors; and
a storage device storing instructions that, when executed by the one or more processors, cause the system to
access a master haptics library storing a plurality of haptic block templates, each haptic block template representing a basic haptic element and having block parameters,
receive haptic effect information,
generate, from the master haptics library, a first haptic block having a first haptic block template and first block parameters according to the haptic effect information,
attach a first timestamp to the first haptic block according to the haptic effect information,
generate, from the master haptics library, a second haptic block having a second haptic block template and second block parameters according to the haptic effect information,
attach a second timestamp to the second haptic block according to the haptic effect information,
encapsulate the first haptic block and the first timestamp with the second haptic block and the second timestamp into a haptic data unit, and
transmit the haptic data unit to a haptic server system for distribution to one or more client haptic devices.

6. The system of claim 5 , wherein the one or more processors are further configured to cause the system to encapsulate a session identification into the haptic data unit, the session identification representing a complete haptic effect comprising the first haptic block and the second haptic block; and
wherein the one or more processors are further configured to cause the system to encapsulate an access identification into the haptic data unit associated with the session identification, the access identification representing a class of clients selected to receive the complete haptic effect.

7. The system of claim 5, wherein the first and second block parameters include magnitude and repetitions.

8. The system of claim 5, wherein the basic haptic element comprises an actuator activation of less than approximately 200ms.

9. The system of claim 5, wherein the one or more processors are further configured to cause the system to
generate a master haptics sub-library based on the master haptics library, the first block template of the first haptic block, and the second block template of the second haptic block, and
transmit the master haptics sub-library to the haptic server.

10. A computer implemented method of transmitting a stream of haptic effects, the method being performed on a haptic server having one or more physical processors programmed with computer program instructions that, when executed by the one or more physical processors, cause the haptic server to perform the method, the method comprising:
establishing communication with a haptic authoring system;
receiving from the haptic authoring system a master haptics sub-library comprising a subset of a master haptics library stored on the haptic authoring system;
establishing communication with a client haptic device;
accessing a device haptics library;
providing to the client haptic device a device specific haptics sub-library from the device haptics library according to a device identification of the client haptic device and the master haptics sub-library;
receiving a master haptics stream from the haptic authoring system;
generating a client haptics stream from the master haptics stream; and
transmitting the client haptics stream to the client haptic device.

11. The method of claim 10, wherein generating the client haptics stream includes selecting haptic data units from the master haptics stream according to an account identification of the client haptic device.

12. The method of claim 11, wherein the client haptic device is a first client haptic device, the device specific haptics sub-library is a first device specific haptics sub-library, the device identification is a first device identification, the client haptics stream is a first client haptics stream, and the account identification is a first account identification, the method further comprising:
establishing communication with a second client haptic device;
providing to the second client haptic device a second device specific haptics sub-library determined according to a second device identification of the second client haptic device;
generating the first client haptics stream by selecting haptic data units of the master haptics stream according to a first account identification of the first client haptic device;
generating a second client haptics stream by selecting haptic data units of the master haptics stream according to the second account identification of the second client haptic device; and
transmitting the second client haptics stream to the second client haptic device.

13. A haptic server system for transmitting a stream of haptic effects, the haptic server system comprising:
one or more processors; and
a storage device storing instructions that, when executed by the one or more processors, cause the system to
establish communication with a haptic authoring system,
receive from the haptic authoring system a master haptics sub-library comprising a subset of a master haptics library stored on the haptic authoring system;
establish communication with a client haptic device,
access a device haptics library;
provide to the client haptic device a device specific haptics sub-library from the device haptics library determined according to a device identification of the client haptic device and the master haptics sub-library,
receive a master haptics stream from the haptic authoring system,
generate a client haptics stream, and
transmit the client haptics stream to the client haptic device.

14. A computer implemented method of decoding a client haptics stream for playback, the method being performed on a client haptic device having one or more physical processors programmed with computer program instructions that, when executed by the one or more physical processors, cause the client haptic device to perform the method, the method comprising:
establishing communication with a haptic server system;
obtaining a client haptics library from the haptic server, wherein the client haptics library is generated by the haptic server according to a device identification of the client haptic device;
receiving, by the client haptic device, a client haptics stream from the haptic server, the client haptics stream comprising a plurality of haptic blocks and a corresponding plurality of timestamps;
generating a plurality of haptic effects for playback on one or more haptic output devices of the client haptic device, each haptic effect selected from the client haptics library according to a content identifier of a corresponding haptic block from the client haptics stream to be played back at a time in accordance with a timestamp of the corresponding haptic block; and
outputting the plurality of haptic effects to the one or more actuators of the client haptic device.

15. A client haptic device for decoding a client haptics stream for playback, the client haptic device comprising:
one or more processors; and
a storage device storing instructions that, when executed by the one or more processors, cause the client haptic device to
establish communication with a haptic server,
obtain a client haptics library from the haptic server, wherein the client haptics library is generated by the haptic server according to a device identification of the client haptic device,
receive the client haptics stream from the haptic server, the client haptics stream comprising a plurality haptic blocks and a corresponding plurality of timestamps,
generate a plurality of haptic effects for playback on a haptic output device of the client haptic device, each haptic effect selected from the client haptics library according to a corresponding haptic block from the client haptics stream to be played back at a time in accordance with a timestamp of the corresponding haptic block, and
output the plurality of haptic effects to the actuator of the client haptic device.
